(19)

Europäisches
Patentamt
European
Patent Office
Office européen
des brevets

(11)  **EP 2 645 712 A1**

(12)  **EUROPEAN PATENT APPLICATION**

(43) Date of publication:
**02.10.2013  Bulletin 2013/40**

(51) Int Cl.:
**H04N 7/26** (2006.01)  **G06T 3/40** (2006.01)
**H04N 7/46** (2006.01)

(21) Application number: **12180241.7**

(22) Date of filing: **13.08.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **26.03.2012  EP 12161286**

(71) Applicant: **Siemens Aktiengesellschaft
80333 München (DE)**

(72) Inventors:
• **Amon, Peter
  81675 München (DE)**
• **Nagler, Johannes
  81373 München (DE)**

(54)  **Image downsampling**

(57)  The invention describes a method for converting a first image having a first high resolution into a second image having a second lower resolution. The first image ($P_{HR}$) is a compressed image comprising a number of blocks (BB) each having a first amount of transformation coefficients ($c_{ij}$). The second image ($P_{LR}$) is a decoded image comprising a second amount of pixel values ($vf_{km}$), the second amount of pixel values being smaller than the total amount of the transformation coefficients ($c_{ij}$) of all blocks (BB) of the first image ($P_{HR}$). The method comprises the steps of downsampling by a target downscaling factor ($s_{target}$) for reducing the resolution and decoding the transformation coefficients ($c_{ij}$) to the pixel values ($vf_{km}$). The step of downsampling is carried out stepwise with a first and a second downsampling step, wherein a first downscaling factor ($s_1$) is used in the first downsampling step and a second downscaling factor ($s_2$) is used in the second downsampling step such that the target downscaling factor ($s_{target}$) equals the product of the first and second downscaling factors ($s_1$, $s_2$).

FIG 4

EP 2 645 712 A1

**Description**

The invention relates to a method and a device for converting a first image having a first high resolution into a second image having a second lower resolution.

In applications like healthcare or video surveillance single images, image sequences or video streams have to be sent to a client, e.g. a tablet computer, a laptop or any other computer. In such applications, a server needs to be able to process the images in terms of rescaling and adapt them to the client's display resolution. Processing the images on server side saves transmission resources of a network, often a wireless network like WiFi, and computational resources of the client for decoding and rescaling the images or the stream. Rescaling of images in terms of reducing the amount of pixels is sometimes referred to as downsampling. An efficient downsampling method on the one hand has to preserve the quality of the images and on the other hand is computationally low complex.

Often, the images are stored as compressed image data. The image data may be represented by Discrete Cosine Transform (DCT) coefficients, Discrete Sine Transform (DST) coefficients or Karhunen Loeve Transform (KLT) coefficients. Compressed image data is used, for example, on playout from storage space like medical databases, surveillance archives, or other video management solutions.

In principle, downsampling may be executed in the so-called pixel domain by using filter operations. If the image to be downsampled is compressed, a decoding step, e.g. an Inverse Discrete Cosine Transform (IDCT) has to be applied first. To downsample an image in the pixel-domain, the image is re-sampled at a coarser grid by applying interpolation techniques. As a result, the downsampled image consists of these interpolated pixel values. The resulting image quality of the downsampled image depends on the used interpolation method. With an interpolation method the image can be subsampled after optionally applying a smoothing anti-aliasing filter to the data. B-spline-based interpolation methods are often used, e.g. nearest neighbor interpolation, B-linear interpolation, or bicubic interpolation. B-spline interpolation is one kind of polynomial interpolation, where the interpolated function is a piecewise polynomial that is continuous at the data points. As known from interpolation and approximation theory, high-order polynomials achieve better quality due to higher approximation order, but are computational more complex.

Pixel- domain downsampling has the disadvantage that the compressed high- resolution image has to be decoded fully. Furthermore, the full- resolution image has to be filtered. Both steps are computationally complex.

Another approach is to use the so-called compressed-domain downsampling. When using compressed-domain downsampling compressed images can be downsampled in the compressed domain, e.g. the DCT-, DST- or KLT-domain. Here, a decoding step follows after a downsampling step.

Downsampling in the DCT domain can be achieved by simply extracting low-frequency transformation coefficients from each DCT block. However, this procedure has the disadvantage that the quality of a subsampled image is reduced since compressed-domain's downscaling introduces artifacts such as ringing artifacts.

It is therefore an object of the present invention to provide a method and a device which enables an easier conversion of a first image into a second image having a lower resolution as the first image and which enable downsampling with high quality and low resource consumption at the same time.

This object is solved by a method according to claim 1 and a device according to the features of claim 16. Preferred embodiments are set out in the dependent claims.

The invention provides a method for converting a first image having a first high resolution into a second image having a second lower resolution. The first image is a compressed (i.e. coded) image comprising a number of blocks each having a first amount of transformation coefficients. The second image is a decoded image comprising a second amount of pixel values, wherein the second amount of pixel values is smaller than the total amount of the transformation coefficients of all blocks of the first image. The method comprises the steps of downsampling by a target downscaling factor for reducing the resolution and decoding the transformation coefficients to the pixel values. Here, the step of downsampling is carried out stepwise with a first and a second downsampling step, wherein a first downscaling factor is used in the first downsampling step and a second downscaling factor is used in the second downsampling step such that the target downscaling factor equals the product of the first and the second downscaling factors.

The stepwise downsampling has the advantage that it is of lower complexity than the complete known pixel-domain downsampling while the quality of the downsampling is higher than from the pure compressed-domain downsampling. As a result, the suggested method reduces the complexity for the decoding step and the downscaling step while the image quality still can be preserved.

According to an embodiment, in the first downsampling step the first image is downsampled by the first downscaling factor into a compressed intermediate image having a third amount of transformation coefficients being lower than the first amount of transformation coefficients and being higher than the second amount of pixel values. After that, the compressed intermediate image is decoded to a decoded intermediate image. Next, in the second downsampling step, the decoded intermediate image is downsampled by the second downscaling factor into the second image. This procedure can be called a kind of hybrid downsampling since the downsampling is carried out in the compressed-domain and in the pixel-domain. The compressed-domain downscaling step reduces the complexity for the following decoding step and the pixel-domain downscaling step, while the image quality still can be preserved.

According to a further embodiment, in the first downsampling step a number of transformation coefficients representing frequencies below a given cut-off frequency is extracted from the first image and added as transformation coefficients to the intermediate image. These frequencies below the given cut-off frequency may be arranged in a sub-block. Although a sub-block may be of any size (e.g. 2×2, 3×3, 5×5, 6×6, 2×3, 2×4, and so on), it is preferred that the sub-block size is a power of two since computational resources needed are low (i.e., fast algorithms for executing the inverse transform are known). For example, if an original block of the first image has the size 8 × 8, the sub-block may be of the size 4x4.

When extracting the transformation coefficients representing frequencies below a given cut-off frequency and adding them to the intermediate image, the transformation coefficients extracted from the first image are not changed or amended.

The cut-off frequency may be adapted to one of the intensity of high frequencies in the first image, the occurrence of edges or available computational resources. The amount of the cut-off frequency defines the number of transformation coefficients which is extracted from the first image as is known for the skilled person.

In a preferred embodiment the cut-off frequency may be adapted from block to block of the first image. This is called a block-adaptive cut-off frequency. This procedure might be used if parts of the image have a relatively flat texture, i.e. no or low edges and/or mostly low-frequency coefficients.

In case that the intermediate image comprises blocks of different size due to an application of block-adaptive cut-off frequency in the first downsampling step, coefficients of blocks being smaller than the biggest block are padded with zero. This allows using special implementations in the decoding step with lower complexity since coefficients with the value of zero can be taken into account.

The first and the second downsampling steps may be performed block wise.

In a further embodiment at least some of the blocks of the first image are processed with stepwise downsampling. This means that the decision whether the suggested stepwise downsampling process is applied can be decided from block to block. While some of the blocks of the first image are downsampled using the suggested method other blocks can be downsampled in the pixel-domain or the compressed-domain as described in the introduction.

According to a further embodiment, a coded video data stream comprising at least two first pictures is converted into a decoded video data stream comprising at least two second pictures, wherein the target downscaling vector is constant during converting at least some of the first images while the first or the second downscaling factor may be varied from image to image. In this embodiment the cut-off frequency may be changed from frame to frame. Hence, this procedure may be called frame-adaptive cut-off frequency. Here, the individual downscaling factors for the first and the second downscaling step do not need to be the same as long as the total downscaling factor remains constant.

In case that the transformation coefficients of the blocks of the first image are entropy encoded, an entropy decoding step is performed prior to the first downsampling step.

In case that a block-to-block prediction, e.g., a differential pulse code modulation (DPCM) for predicting, the transformation coefficients, e.g. the DC coefficients, was used for encoding the first image, the block-to-block prediction of the transformation coefficients of the first image is reverted prior to the first downsampling step.

As will be apparent to the person skilled in the art, in the decoding step a pixel representation of the transformation coefficients of the intermediate image is generated.

According to a further embodiment, an inverse quantization of the transformation coefficients of the first image or the intermediate image is performed prior or after the first downsampling step.

According to a further embodiment, in the decoding step scaling or normalizing of the transformation coefficients of the intermediate image is performed. Normalizing or scaling typically is performed before an inverse transformation to achieve a correct reconstruction of pixel values.

Furthermore, a device for converting a first image having a first high resolution into a second image having a second lower resolution is suggested. The first image is a compressed image comprising a number of blocks each having a first amount of transformation coefficients. The first image may be a block- based image or video format. The second image is a decoded image comprising a second amount of pixel values, wherein the second amount of pixel values is smaller than the total amount of the transformation coefficients of all blocks of the first image. The second image may be adapted to be displayed on a client which has a display resolution being different from the resolution of the first image. The device comprises a means for carrying out the steps of downsampling by a target downscaling factor for reducing the resolution and decoding the transformation coefficients to the pixel values. The means is further adapted to carry out the step of downscaling stepwise with a first and a second downsampling step, wherein a first downscaling factor is used in the downsampling step and a second downscaling factor is used in the second downsampling step such that the target downscaling factor equals the product of the first and the second downscaling factors.

The device has the same advantages as set out in conjunction with the method described above. Furthermore, it may comprise further means for carrying out the above mentioned steps of the suggested method.

The invention will be explained in more detail with reference to the accompanying figures.

Fig. 1    shows the known principle of pixel-domain downsampling.

Fig. 2    shows the known procedure of downsampling in the compressed domain.

Fig. 3    illustrates the known block-based DCT-domain downsampling.

Fig. 4    shows the downsampling method according to the invention.

Fig. 5    shows the procedure of downsampling of JPEG images according to the invention.

Fig. 6    shows an illustration of applying a block-adaptive cut-off frequency according to the invention.

Fig. 7    shows a comparison of computational complexity of the known downsampling methods and the method according to the invention.

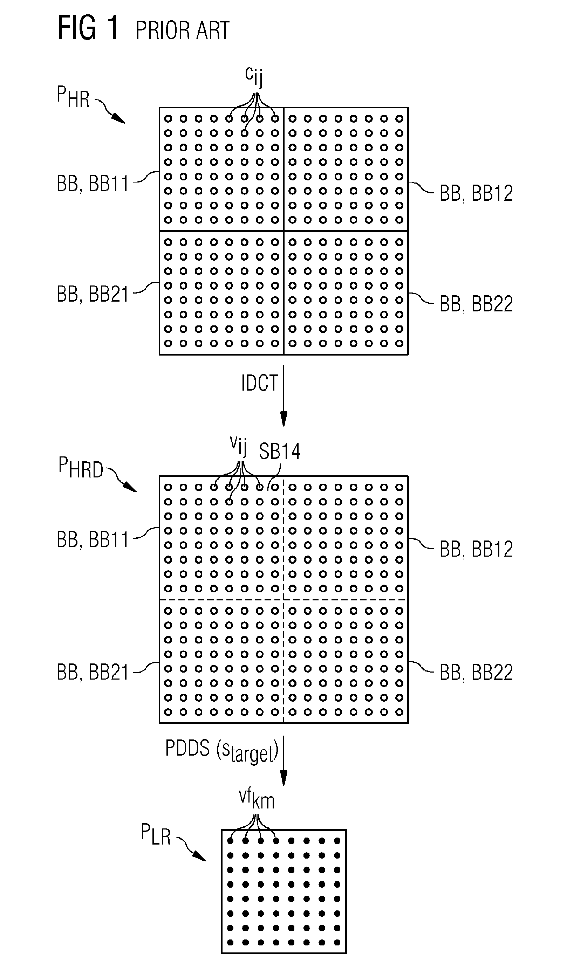

Fig. 1 illustrates the process of downsampling a first image $P_{HR}$ having a first high resolution into a second image $P_{LR}$ having a second lower resolution. The first image $P_{HR}$ consists of a number of blocks BB. In the example, four blocks BB11, BB12, BB21, BB22 are illustrated. Since the first image $P_{HR}$ is a compressed image each of the blocks BB has a first amount of transformation coefficients $c_{ij}$. Index i represents the number of lines, j the number of columns of a respective block BB. The second image $P_{LR}$ is a decoded image which consists of a second amount of pixel values $vf_{km}$. The second amount of pixel values $vf_{km}$ is smaller than the total amount of the transformation coefficients $c_{ij}$ of all blocks BB of the first image $P_{HR}$. The index k represents the number of lines, the index m the number of columns of the pixel values of the second image $P_{LR}$. In the example, each block BB of the first image $P_{HR}$ comprises $8 \times 8 = 64$ transformation coefficients. In the example, the second image $P_{LR}$ comprises $4 \times 4 = 16$ pixel values. As apparent to a person skilled in the art, the resolution of the second image $P_{LR}$ is reduced by factor $2 \times 2 = 4$ in comparison to the first image $P_{HR}$.

When downsampling, i.e. reducing the number of represented pixels of the first image $P_{HR}$, the transformation coefficients $c_{ij}$ of each block BB of the first image $P_{HR}$ have to be decoded first. Assuming that each of the blocks BB is a DCT-block and the transformation coefficients $c_{ij}$ are DCT-coefficients, an Inverse Discrete Cosine Transformation (DCT) will be applied. This step is illustrated with IDCT. As a result, each of the transformation coefficients $c_{ij}$ is transformed to a pixel value $v_{ij}$. The number of pixel values $v_{ij}$ equals the number of transformation coefficients $c_{ij}$ of each block BB of the first image $P_{HR}$.

In a next step, downsampling PDDS can take place in the pixel domain using filter operations. As known to the person skilled in the art, there are several methods that downsample an image in the pixel domain. These methods apply an optional smoothing anti-aliasing filter to the data (i.e. the pixel values $v_{ij}$) and subsequently subsample the image by use of an interpolation method. For example, a B-spline-based interpolation method, nearest neighbor interpolation, B-linear interpolation or bicubic interpolation may be applied. To downsample the image as illustrated with PDDS ($S_{target}$), the image $P_{HRD}$ is re-sampled at a coarser grid.

As a result, the downsampled image $P_{LR}$ consists of these interpolated pixel values $vf_{km}$ where $vf_{km}$ results from the chosen downsampling method. Prior to interpolation, the image $P_{HRD}$ can be smoothened by a smoothing filter (e.g. a low-pass filter) to avoid aliasing effects.

The resulting image quality of the second image or low resolution image $P_{LR}$ depends on the used interpolation method. As known from interpolation and approximation theory, high-order polynomials achieve better quality due to the higher approximation order. However, they are computational more complex.

Although a good image quality can be achieved, the compressed high-resolution image $P_{HR}$ has to be decoded fully to the intermediate image $P_{HRD}$ and the pixel-domain downsampling has to filter the full-resolution image $P_{HRD}$. Hence, the method illustrated in Fig. 1 is computationally complex.

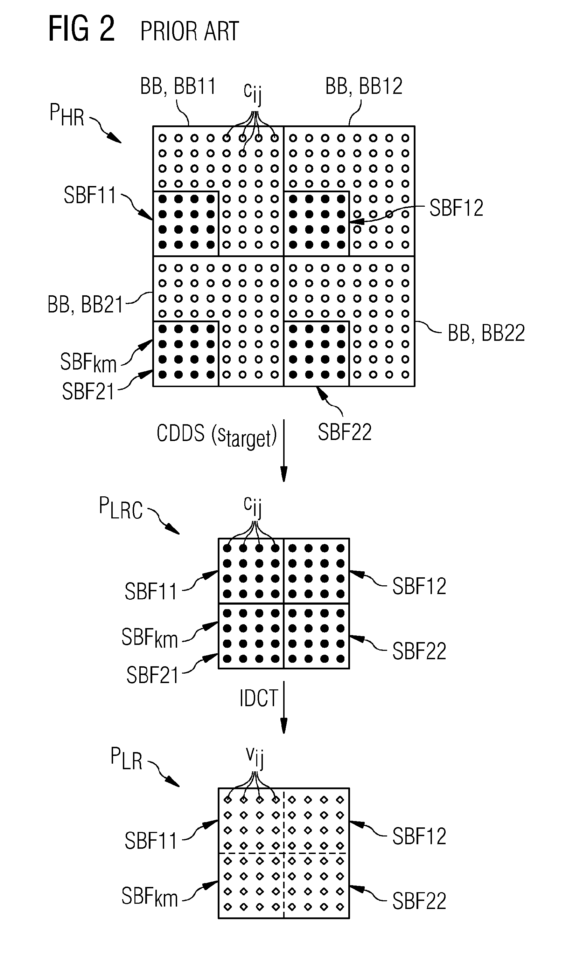

Fig. 2 illustrates the well-known downsampling process in the compressed-domain. Basis of downsampling is the first image $P_{HR}$ having again four blocks BB11, BB12, BB21, BB22 (in general blocks BB) for example only. Each of the blocks BB comprises $8 \times 8 = 64$ transformation coefficients $c_{ij}$. By way of example, the transformation coefficients $c_{ij}$ again represent DCT coefficients in a DCT-block BB. Downsampling with a target downscaling factor $s_{target}$ in the step CDDS ($s_{target}$) is performed in the compressed domain, i.e. the DCT domain. Result of the downsampling step is a coded low-resolution picture $P_{LRC}$ which is decoded to a second, low resolution picture $P_{LR}$ in the decoding step IDCT. The decoding step (IDCT) follows after the downsampling step CDDS.

Downsampling in the DCT domain can be achieved by simply extracting low-frequency DCT coefficients $c_{ij}$ from each DCT block BB11, BB12, BB21, BB22. A sub-block SBF11, SBF12, SBF21, SBF22 (in general: $SBF_{km}$) comprising DCT coefficients below a chosen cut-off frequency is outlined in each of the blocks BB11, BB12, BB21, BB22 of the first image $P_{HR}$. Only by way of example each sub-block $SBF_{km}$ has a size of $4 \times 4$. Each sub-block is extracted without any modification from the original 8 × 8 DCT block BB11, BB12, BB21, BB22. The number of sub-blocks $SBF_{km}$ represents the coded low-resolution image $P_{LRC}$.

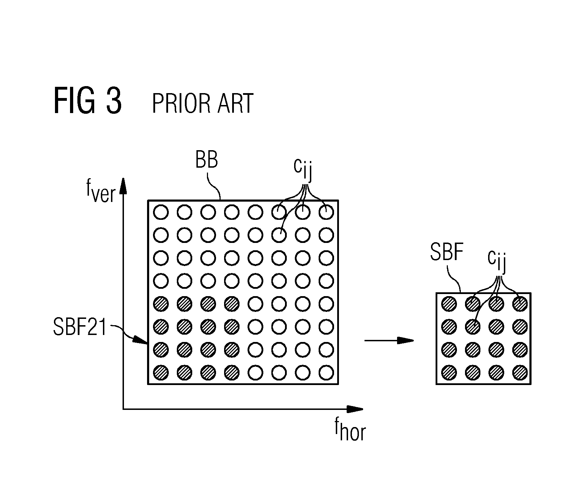

Fig. 3 illustrates the block-based DCT-domain downsampling. Illustrated is a block BB with its 8 × 8 transform coefficients $c_{ij}$. The transform coefficients or DCT coefficients $c_{ij}$ being marked grey are part of the sub-block SBF to be extracted from the block BB. Since the transformation coefficients or DCT coefficients $c_{ij}$ of the block BB are arranged with regard to their horizontal and vertical frequencies $f_{hor}$ and $f_{ver}$ extracting of DCT coefficients below a cut-off frequency is easy since they are arranged in sub-block SBF. This sub-block is used for generating the image $P_{LRC}$.

As will be apparent to the skilled person, sub-blocks of other sizes can be extracted from each block BB of the first image.

The coefficients of the sub-blocks $SBF_{km}$ typically are normalized, e.g. scaled, before inverse transformation in the step IDCT to achieve a correct reconstruction of the pixel values. This can be derived from the definition of the DCT and IDCT as shown below. The one-dimensional forward DCT for a signal x of length N is defined as:

$$X_k = \sqrt{\frac{2}{N}} \sum_{n=0}^{N-1} x_n \cos\left[\frac{\pi}{N}\left(n+\frac{1}{2}\right)k\right], \quad k = 0,...,N-1 \ .$$

The inverse transform (IDCT) is given by:

$$x_k = \sqrt{\frac{2}{M}} \sum_{m=0}^{M-1} X_m \cos\left[\frac{\pi}{M}\left(m+\frac{1}{2}\right)k\right], \quad k = 0,...,M-1 \ .$$

If the inverse transformation (IDCT) has a different size M than the DCT of size N, the coefficients have to be rescaled by the factor $\sqrt{\frac{M}{N}}$ prior to the inverse transformation. As an alternative for practical implementations, the pixel values can be scaled already during an optionally existing inverse quantization step before calculating inverse transformation or after calculation the inverse transformation.

The procedure illustrated in Fig. 2 and Fig. 3 has the disadvantage that the quality of the subsampled image, i.e. $P_{LRC}$, is reduced since compressed-domain downscaling introduces artifacts. Hence, although downsampling does not need much computational resources, image quality is low.

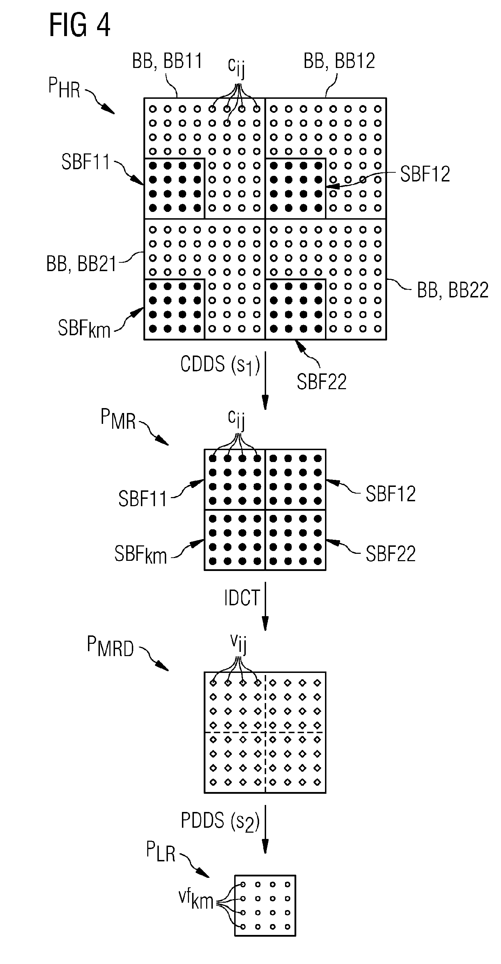

To overcome the drawbacks of the downsampling methods described above, the method according to the invention uses "hybrid" downsampling. The steps are illustrated in Fig. 4. Within this method, downsampling is split up to two different downsampling steps. The compressed first image $P_{HR}$ is downsampled by a first downscaling factor $s_1$ in the compressed domain (cf. step CDDF($s_1$)). Next, the remaining compressed image $P_{MR}$ which has a reduced number of transformation coefficients $c_{ij}$ is decoded, e.g. by applying an inverse transformation (step IDCT). Finally, a second downsampling step is performed in the pixel domain where the decoded medium-resolution image $P_{MRD}$ is downsampled by a second downscaling factor $s_2$ (cf. PDDS($s_2$)). The downscaling factors $s_1$ and $s_2$ fulfill the following equation:

$$s_{target} = s_1 \cdot s_2 \ ,$$

where $s_{target}$ is a target downscaling factor.

The compressed-domain downscaling step CDDS reduces the complexity for the decoding step IDCT and the second downsampling step in the pixel domain (PDDS) while the image quality still can be preserved.

Referring to Fig. 4, the first image $P_{HR}$ comprises four blocks BB1, BB12, BB21 and BB22 (in general: BB). Each of the blocks BB comprises 8 × 8 transformation coefficients $c_{ij}$. For executing the first downsampling step CDDS into the intermediate image $P_{MR}$ having a reduced resolution by factor $s_1$ a number of transformation coefficients representing frequencies below a given cut-off frequency is extracted from each block BB of the first image $P_{HR}$. As already described in conjunction with Fig. 2, the transformation coefficients are arranged in a sub-block. In the example, each of the sub-blocks SBF11, SBF12, SBF21, SBF22 (in general: $SBF_{km}$) comprises 4 × 4 = 16 transformation coefficients which frequencies are below the given cut-off frequency. The transformation coefficients $c_{ij}$ of these sub-blocks $SBF_{km}$ are merged in the intermediate image $P_{MR}$ which has a reduced resolution resulting from the reduced amount of transformation coefficients in each block.

For decoding the intermediate image $P_{MR}$ an Inverse Discrete Cosine Transform (IDCT) will be applied, assuming that transformation coefficients $c_{ij}$ of the first image are DCT coefficients by way of example. This results in the decoded intermediate image $P_{MRD}$ having the same amount of pixel values $v_{ij}$ compared to the amount of transform coefficients $c_{ij}$ of the intermediate image $P_{MR}$. In the figure the decoded pixel values $v_{ij}$ are illustrated by rhombs.

After having decoded the intermediate image $P_{MR}$ the second downsampling step PDDS will be performed in the pixel domain by using a second downscaling factor $s_2$. Here, an optional smoothing anti-aliasing filter to the data and a subsequently subsampling by use of an interpolation method will be applied. The procedure may be the same as outlined in conjunction with Fig. 1. This results in a reduced number of pixel values $vf_{km}$.

The resulting downsampled image $P_{LR}$ achieves nearly the same image quality as by corresponding pixel-domain downsampling (as described in Fig. 1), while the complexity in this example is reduced to nearly a quarter of the pure pixel-domain method.

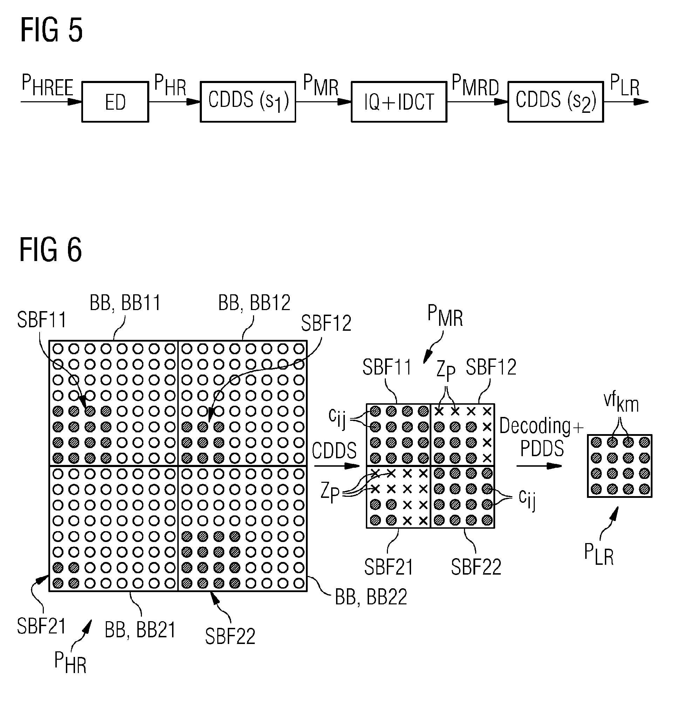

The method described may be applied to JPEG images and other formats. Fig. 5 shows an extended procedure of the core idea where the input format to the downscaling procedure is a JPEG image. The JPEG image is represented by $P_{HREE}$. In order to have access to the optionally quantized DCT coefficients of the image $P_{HREE}$ the entropy encoding (i.e. Huffman Coding) of the image $P_{HREE}$ has to be reverted by an entropy decoding step ED. Result of the entropy decoding step ED is an image which corresponds to the first or high- resolution image $P_{HR}$ of Fig. 4. Corresponding to the procedure before, a first downsampling step is carried out by using the first downscaling factor $s_1$ (CDDS ($s_1$)) . In this context, it is also necessary to revert block- to- block prediction of DC coefficients. The block- to- block prediction may be in the form of a Differential Pulse Code Modulation (DPCM) coding. The DC coefficients represent the frequency zero in horizontal and vertical direction. After reconstruction of the optional quantized coefficients, the compressed-domain downsampling reduces the number of coefficients as described above. The decoding step IDCT may comprise the inverse quantization IQ and possibly a scaling. However, the inverse quantization IQ can also take place before the DCT- domain downsampling step CDDS. The second downsampling step PDDS follows, this time in the pixel domain, which yields the downsampled load- resolution image $P_{LR}$.

In addition to images in the format JPEG, also other block-based image formats, for example JPEG XR, or video formats, for example H.264/AVC intra frames, can be processed by the hybrid downsampling method.

In the examples described, the same cut-off frequency has been used for each block BB of the first image $P_{HR}$ resulting in the same amount of transformation coefficients of each sub-block. However, a block-adaptive cut-off frequency may be used. The cut-off frequency can be adaptive on a block basis according to the intensity of high frequencies in the compressed high-resolution image (i.e. the number and magnitude of non-zero DCT coefficients) and/or the occurrence of edges and/or the available computational resources. Fig. 6 illustrates a block-to-block adaptive cut-off frequency for the selection of low-frequency coefficients. While in blocks BB11 and BB22 the same cut-off frequency has been chosen (resulting in the same number of transformation coefficients to be extracted), in the blocks BB21 and BB12 lower cut-off frequencies have been chosen. The transformation coefficients to be extracted according to the respective cut-off frequency are marked with grey bullets. A block-adaptive cut-off frequency may be chosen if parts of the image have a relatively flat texture resulting in no edges and/or mostly low frequency coefficients.

As can be seen from Fig. 6 the block size of the sub-blocks $SBF_{km}$ of the intermediate image $P_{MR}$ is based on the biggest sub-block size, here SBF11 and SBF22. To compensate for different block sizes after the first downsampling step CDDS those array elements in the blocks SBF12, SBF21 of the intermediate image $P_{MR}$ which have not an extracted transformation coefficient from the first image $P_{HR}$ are padded with zero $z_p$ and additionally depicted with crosses. This padding step allows using special implementations of the IDCT in the decoding step with lower complexity, since coefficients with a value of zero can be taken into account to simplify the calculation of the inverse transformation.

The first and the second downsampling step CDDS and PDDS may be performed on a block basis where no interrelations between different blocks have to be taken into account. In this case, padding with zeros is not necessary and the inverse transformation IDCT can be done on different block sizes.

Furthermore, the cut- off frequency may be chosen frame- adaptive in case the sequence of first images is converted in a sequence of second images. The individual downscaling factors for the first downsampling step CDDS and the second downsampling step PDDS do not need to be fixed as long as the total downscaling factor $s_{target}$ remains constant. The first and the second downscaling factors $s_1$ and $s_2$ may vary from frame to frame. The cut- off frequency, i.e. the number of transform coefficients extracted in the first downsampling step CDDS, may be chosen according to the criteria mentioned above.

As a special case, not all blocks of the first image have to be downsampled using the proposed hybrid downsampling scheme. It is sufficient to process only some of the blocks using a hybrid scheme and others using PDDS or CDDS only.

The invention is not limited to compression formats disclosed so far. Moreover, the invention can be used for a great variety of compression formats. Instead of processing DCT compressed images also images compressed by other block-based transforms (e.g. DST - Discrete Scene Transform, KLT - Karhunen Loeve Transform) can be downsampled using the proposed hybrid algorithm.

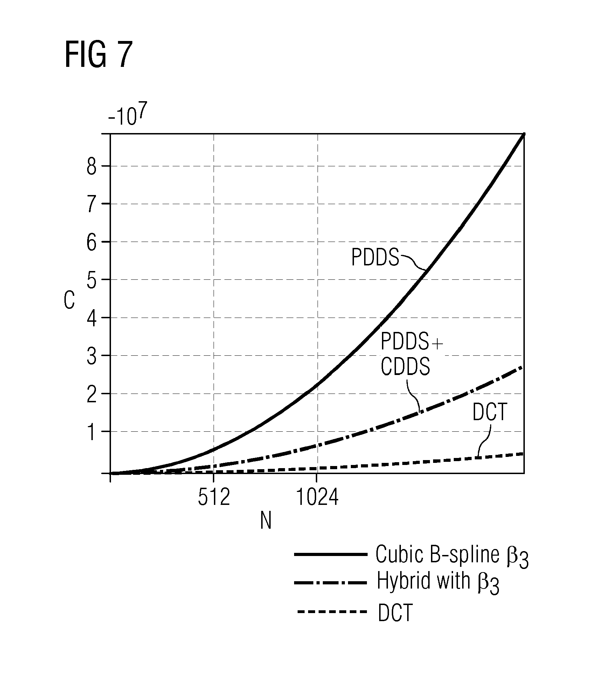

The computational complexity of the methods described above is illustrated in Fig. 7. In this example, a cubic B- spline pixel- domain downsampling method is used for PDDS (cf. Fig. 1) and the suggested method (according to Figs. 4 and 5). The complexity of the downsampled methods for an $N \times N$ image and a $B \times B$ DCT block size (e.g. 8 for JPEG) can be stated in a big- O notation. The DCT domain method will extract nxn sub- blocks (n < B) while the pixel-domain method uses an $m \times m$ filter kernel (e.g. m = 3 for cubic B- spline). The complexity of these methods yields for the DCT domain $O(N^2 \log(n))$, for the pixel- domain $O(N^2 (\log(n) + m^2))$ and for the hybrid approach $O(N^2 (\log(n) + 2(n/B)^2 m^2))$. Thus the complexity reduction of the hybrid downsampling scheme compared to PDDS depends on the factor n/B. As can be seen from Fig. 7, the complexity C of the hybrid scheme (PDDS + CDDS) is much lower than downsampling in pixel- domain only (PDDS). However, it is still higher than downsampling in the compressed- domain (DCT).

## Claims

1. A method for converting a first image having a first high resolution into a second image having a second lower resolution, wherein=

   - the first image ($P_{HR}$) is a compressed image comprising a number of blocks (BB) each having a first amount of transformation coefficients ($c_{ij}$);
   - the second image ($P_{LR}$) is a decoded image comprising a second amount of pixel values ($vf_{km}$), the second amount of pixel values being smaller than the total amount of the transformation coefficients ($c_{ij}$) of all blocks (BB) of the first image ($P_{HR}$);

   the method comprises the steps of downsampling by a target downscaling factor ($s_{target}$) for reducing the resolution and decoding the transformation coefficients ($c_{ij}$) to the pixel values ($vf_{km}$), wherein

   - the step of downsampling is carried out stepwise with a first and a second downsampling step, wherein a first downscaling factor ($s_1$) is used in the first downsampling step and a second downscaling factor ($s_2$) is used in the second downsampling step such that the target downscaling factor ($s_{target}$) equals the product of the first and second downscaling factors ($s_1$, $s_2$).

2. The method according to claim 1, wherein

   a) in the first downsampling step (CDDS) the first image ($P_{HR}$) is downsampled by the first downscaling factor ($s_1$) into a compressed intermediate image ($P_{MR}$) having a third amount of transformation coefficients ($c_{ij}$) being lower than the first amount of transformation coefficients ($c_{ij}$) and being higher than the second amount of pixel values ($v_{ij}$);
   b) the compressed intermediate image ($P_{MR}$) is decoded to a decoded intermediated image ($P_{MRD}$);
   c) in the second downsampling step (PDDS) the decoded intermediate image ($P_{MRD}$) is downsampled by the second downscaling factor ($s_2$) into the second image ($P_{LR}$).

3. The method according to claim 1 or 2, wherein in the first downsampling step (CDDS) a number of transformation coefficients ($c_{ij}$) representing frequencies below a given cut-off frequency is extracted from the first image ($P_{HR}$) and used as transformation coefficients ($c_{ij}$) to the intermediate image.

4. The method according to claim 3, wherein the transformation coefficients ($c_{ij}$) extracted from the first image ($P_{HR}$) are not changed or amended.

5. The method according to claim 3 or 4, wherein the cut-off frequency is adapted to one or several of
   = the intensity of high frequencies in the first image,
   = the occurrence of edges,
   = available computational resources.

6. The method according to one of the claims 3 to 5, wherein the cut-off frequency is adapted from block (BB) to block (BB) of the first image ($P_{HR}$).

7. The method according to claim 6, wherein in case the intermediate image ($P_{MR}$) comprises blocks ($SBF_{km}$) of different size due to application of block-adaptive cut-off frequency in the first downsampling step, coefficients of blocks being smaller than a biggest block are padded with zero.

8. The method according to one of the preceding claims, wherein the first and the second downsampling steps (CDDS, PDDS) are performed blockwise.

9. The method according to one of the preceding claims, wherein at least some of the blocks (BB) of the first image ($P_{HR}$) are processed with stepwise downsampling.

10. The method according to one of the preceding claims, wherein a coded video data stream comprising at least two first pictures is converted into a decoded video data stream comprising at least two second pictures, wherein the target downscaling factor is constant during converting at least some of the first images while the first or the second downscaling factor ($s_1$, $s_2$) may be varied from image to image.

11. The method according to one of the preceding claims, wherein in case the transformation coefficients ($c_{ij}$) of the blocks (BB) of the first image ($P_{HR}$) are entropy encoded, an entropy decoding step is performed prior to the first downsampling step (CDDS).

12. The method according to one of the preceding claims, wherein in case the one or more coefficients ($c_{ij}$) are predicted from block to block, the block-to-block prediction of the transformation coefficients ($c_{ij}$) of the first image is reverted prior to the first downsampling step (CDDS).

13. The method according to one of the preceding claims, wherein in the decoding step (IDCT) a pixel representation of the transformation coefficients ($c_{ij}$) of the intermediate image ($P_{MR}$) is generated.

14. The method according to one of the preceding claims, wherein an inverse quantization of the transformation coefficients ($c_{ij}$) of the first image ($P_{HR}$) or the intermediate image ($P_{MR}$) is performed prior or after the first downsampling step (CDDS).

15. The method according to one of the preceding claims, wherein in the decoding step (IDCT) scaling or normalizing of the transformation coefficients ($c_{ij}$) of the intermediate image (PMR) is performed.

16. A device for converting a first image having a first high resolution into a second image having a second lower resolution, wherein:

- the first image ($P_{HR}$) is a compressed image comprising a number of blocks (BB) each having a first amount of transformation coefficients ($c_{ij}$);
- the second image ($P_{LR}$) is a decoded image comprising a second amount of pixel values ($vf_{km}$), the second amount of pixel values being smaller than the total amount of the transformation coefficients ($c_{ij}$)) of all blocks (BB) of the first image ($P_{HR}$) ;

the device comprises a means for carrying out the steps of downsampling by a target downscaling factor ($s_{target}$) for reducing the resolution and decoding the transformation coefficients ($c_{ij}$) to the pixel values ($vf_{km}$), wherein the means is further adapted to

- carry out the step of downsampling stepwise with a first and a second downsampling step, wherein a first downscaling factor ($s_1$) is used in the first downsampling step and a second downscaling factor ($s_2$) is used in the second downsampling step such that the target downscaling factor ($s_{target}$) equals the product of the first and second downscaling factors ($s_1$, $s_2$).

EP 2 645 712 A1

# FIG 1 PRIOR ART

$P_{HR}$

$c_{ij}$

BB, BB11 — BB, BB12

BB, BB21 — BB, BB22

IDCT

$P_{HRD}$

$v_{ij}$  SB14

BB, BB11 — BB, BB12

BB, BB21 — BB, BB22

PDDS ($s_{target}$)

$vf_{km}$

$P_{LR}$

9

# FIG 2  PRIOR ART

# FIG 3 PRIOR ART

## FIG 4

# FIG 5

$$P_{HREE} \rightarrow \boxed{ED} \xrightarrow{P_{HR}} \boxed{CDDS\ (s_1)} \xrightarrow{P_{MR}} \boxed{IQ+IDCT} \xrightarrow{P_{MRD}} \boxed{CDDS\ (s_2)} \xrightarrow{P_{LR}}$$

# FIG 6

FIG 7

# EP 2 645 712 A1

Europäisches Patentamt

European Patent Office

Office européen des brevets

## EUROPEAN SEARCH REPORT

**Application Number**

EP 12 18 0241

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 154 899 A2 (SAMSUNG ELECTRONICS CO LTD [KR]) 17 February 2010 (2010-02-17) | 1-6,8-16 | INV.<br>H04N7/26<br>G06T3/40<br>H04N7/46 |
| Y | * paragraphs [0003], [0040] - [0041], [0063] - [0065]; figures 4, 8A, 8B *<br>* paragraphs [0070] - [0074]; figures 6, 7, 9 *<br>----- | 7 | |
| X | US 2006/267809 A1 (OGASAWARA SHINO [JP] ET AL) 30 November 2006 (2006-11-30) | 1-4,8,9, 11-16 | |
| Y | * paragraph [0040] - paragraph [0044]; figure 1 *<br>* paragraphs [0009], [0036] *<br>----- | 5-7,10 | |
| Y | WO 2012/033966 A1 (THOMSON LICENSING [FR]; ZHANG DONG-QING [US]) 15 March 2012 (2012-03-15)<br>* page 7, line 26 - page 8, line 9 *<br>* page 12, line 7 - line 13 *<br>* page 13, line 26 - page 14, line 2; figure 9 *<br>----- | 5-7,10 | |
| A | EP 1 109 410 A2 (XEROX CORP [US]) 20 June 2001 (2001-06-20)<br>* paragraph [0018] - paragraph [0023] *<br>----- | 1-16 | **TECHNICAL FIELDS SEARCHED (IPC)**<br>H04N<br>G06T |
| A | EP 0 661 886 A2 (HEWLETT PACKARD CO [US]) 5 July 1995 (1995-07-05)<br>* page 4, line 45 - page 6, line 30; figures 4, 5 *<br>----- | 7 | |

The present search report has been drawn up for all claims

| Place of search | Date of completion of the search | Examiner |
|---|---|---|
| The Hague | 4 June 2013 | Colesanti, Carlo |

EPO FORM 1503 03.82 (P04C01)

**ANNEX TO THE EUROPEAN SEARCH REPORT
ON EUROPEAN PATENT APPLICATION NO.**

EP 12 18 0241

This annex lists the patent family members relating to the patent documents cited in the above-mentioned European search report.
The members are as contained in the European Patent Office EDP file on
The European Patent Office is in no way liable for these particulars which are merely given for the purpose of information.

04-06-2013

| Patent document cited in search report | | | Publication date | Patent family member(s) | | | Publication date |
|---|---|---|---|---|---|---|---|
| EP 2154899 | A2 | | 17-02-2010 | NONE | | | |
| US 2006267809 | A1 | | 30-11-2006 | JP | 4510702 | B2 | 28-07-2010 |
| | | | | JP | 2006339811 | A | 14-12-2006 |
| | | | | US | 2006267809 | A1 | 30-11-2006 |
| WO 2012033966 | A1 | | 15-03-2012 | CN | 103098468 | A | 08-05-2013 |
| | | | | WO | 2012033966 | A1 | 15-03-2012 |
| | | | | WO | 2012033967 | A1 | 15-03-2012 |
| EP 1109410 | A2 | | 20-06-2001 | BR | 0005916 | A | 17-07-2001 |
| | | | | CA | 2327063 | A1 | 17-06-2001 |
| | | | | EP | 1109410 | A2 | 20-06-2001 |
| | | | | JP | 4680377 | B2 | 11-05-2011 |
| | | | | JP | 2001203583 | A | 27-07-2001 |
| | | | | MX | PA00012382 | A | 04-06-2002 |
| | | | | US | 6778707 | B1 | 17-08-2004 |
| EP 0661886 | A2 | | 05-07-1995 | EP | 0661886 | A2 | 05-07-1995 |
| | | | | JP | H07236143 | A | 05-09-1995 |
| | | | | US | 5467131 | A | 14-11-1995 |

EPO FORM P0459

For more details about this annex : see Official Journal of the European Patent Office, No. 12/82